# EUROPÄISCHE PATENTSCHRIFT

(11) **EP 2 197 697 B1**
(45) Veröffentlichungstag und Bekanntmachung des Hinweises auf die Patenterteilung: **10.09.2014**
(21) Anmeldenummer: 08773879.5
(22) Anmeldetag: 05.07.2008
(51) Int. Cl.: B60G 17/08, B62D 33/06, F16F 9/46, F16F 9/096

(54) **DÄMPFUNGSSYSTEM**
DAMPING SYSTEM
SYSTÈME AMORTISSEUR

(30) Priorität: 17.08.2007 DE 102007038933
(43) Veröffentlichungstag der Anmeldung: 23.06.2010
(73) Patentinhaber: Hydac System Gmbh, 66273 Sulzbach/Saar (DE)
(72) Erfinder: SCHOLL, Josef, 66636 Tholey (DE)
(74) Vertreter: Bartels, Martin Erich Arthur
(86) Internationale Anmeldenummer: PCT/EP2008/005503
(87) Internationale Veröffentlichungsnummer: WO 2009/024212

(56) Entgegenhaltungen:
- EP-A- 0 546 300
- EP-A- 1 419 910
- DE-A1- 10 232 769
- DE-A1-102005 062 246
- DE-B3- 10 320 954

## Beschreibung

Die Erfindung betrifft ein Dämpfungssystem, insbesondere in Form einer hydraulischen Kabinenfederung, mit mindestens einem hydraulisch ansteuerbaren Betätigungsteil und mit mindestens einem, an das zuordenbare Betätigungsteil angeschlossenen Hydrospeicher gemäß der Merkmalsausgestaltung des Oberbegriffes des Patentanspruches 1.

Dahingehende Dämpfungs- oder Federungssysteme sind in einer Vielzahl von Ausführungsformen frei auf dem Markt erhältlich, wobei neben einer Kabinenfederung für Fahrzeuge auch sonstige hydraulisch ansteuerbare Betätigungsteile mit einer Dämpfung ausgelegt sein können, wie beispielsweise Hydromotoren für Fahrantriebe. Bei den bekannten Lösungen ist für den Erhalt einer gleichmäßigen oder konstanten Dämpfung ein hoher Regelungsaufwand notwendig, die unter Einsatz einer entsprechend ausgelegten Sensorik den hydraulischen Zustand des jeweils ansteuerbaren Betätigungsteils und/oder seine Position erfaßt.

Durch die DE 103 20 954 B3 ist eine gattungsgemäße hydropneumatische Federung bekannt mit mindestens einem Federungszylinder und mindestens einem Federungsspeicher, insbesondere in Form eines Hydrospeichers, und mit einem vorgesteuerten Ventil, insbesondere in Form eines Proportionalventils, zum Freigeben oder Sperren einer fluidführenden Verbindung zwischen dem Federungszylinder und dem Federungsspeicher, wobei das vorgesteuerte Ventil mittels einer hydraulischen Ansteuereinrichtung in die Schließstellung bringbar ist, wobei die hydraulische Ansteuereinrichtung den Fluiddruck zwischen Federungsspeicher und jeweils zugeordnetem Federungszylinder abgreift, und über ein Ventil, insbesondere Schaltventil, auf eine Betätigungsseite des vorgesteuerten Ventils über mindestens eine Vorsteuerleitung weiterleitet, und wobei zwischen dem einen Ventil und dem vorgesteuerten Ventil ein weiteres Ventil, insbesondere ein Proportionalventil, in die jeweils zuordenbare Vorsteuerleitung zuschaltbar oder in diese geschaltet ist.

Mit der dahingehenden bekannten Federungsanordnung ist es zum einen möglich, sicher große Volumenströme zu beherrschen und zum anderen kann die Federung langsam entsperrt werden, so dass etwaig vorhandene Druckdifferenzen zwischen Federungszylinder und Druckspeicher langsam ausgeglichen werden können, so dass das unerwünschte "Springen" des Fahrzeuges oder der Arbeitsmaschine mit Sicherheit vermieden ist. Was das Konstanthalten der Dämpfungsverhältnisse anbelangt, läßt die bekannte Lösung jedoch noch Wünsche offen.

Ausgehend von diesem Stand der Technik liegt der Erfindung die Aufgabe zugrunde, mit vereinfachtem Aufbau ein Dämpfungssystem zur Verfügung zu stellen, das mit wenig Einsatz- und Baukomponenten das variable Einstellen konstanter Dämpfungsverhältnisse erlaubt. Eine dahingehende Aufgabe löst ein Dämpfungssystem mit den Merkmalen des Patentanspruches 1 in seiner Gesamtheit.

Dadurch, dass gemäß dem kennzeichnenden Teil des Patentanspruches 1 das Verhältnis der Öffnungsquerschnittsflächen für die Kolbenstangenseite und Kolbenseite eines Arbeitszylinders proportional zu dem Verhältnis der Flächen von seiner Kolbenstangenseite und Kolbenseite ist und dass die genannten Öffnungsquerschnitte durch Dämpfungsbohrungen gebildet sind, läßt sich das Verhältnis der Öffnungsquerschnitte des Proportionalventils in Abhängigkeit der Flächenverhältnisse des Arbeitszylinders (Kolben zu Ringfläche) über den gesamten Ventilhub gleichbleibend ausbilden. Das Verhältnis der Öffnungsquerschnitte ist dabei gleich dem Verhältnis Kolben-zu Ringfläche. Dadurch wird bei gleicher Ventilstellung die Ein- bzw. Ausfederbewegung gleichmäßig gedämpft, da sich der Volumenstrom in Abhängigkeit der Zylinderflächen gleichmäßig verändert. Insoweit läßt sich das erfindungsgemäße Dämpfungssystem insbesondere für eine hydraulische Kabinenfederung eines Arbeitsfahrzeuges, wie Baumaschinen od. dgl., einsetzen, bei denen das ansteuerbare Betätigungsteil aus einem hydraulischen Arbeits- oder Federungszylinder gebildet ist.

Mit der erfindungsgemäßen Lösung ist eine variable, proportionale Dämpfung realisierbar, die gegenüber den heutigen Lösungen mit konstanter Dämpfung den Vorteil hat, situationsabhängig und anwenderspezifisch auf Ereignisse reagieren zu können. Durch den Einsatz des Proportionaldrosselventils besteht die Möglichkeit, mit nur einem Ansteuervorgang das jeweils hydraulisch ansteuerbare Betätigungsteil variabel zu drosseln, ohne dass es dabei zu Hystereseerscheinungen beim eigentlichen Dämpfungsvorgang kommt, was die Ansteuerungsgenauigkeit beeinträchtigen könnte. Gegenüber bekannten Lösungen benötigt das erfindungsgemäße Dämpfungssystem auch weniger Regelungsaufwand und hat nur einen geringen Platzbedarf. Auch läßt sich die erfindungsgemäße Dämpfungssystem- Lösung kostengünstig realisieren und funktionssicher betreiben.

Bei einer besonders bevorzugten Ausführungsform des erfindungsgemäßen Dämpfungssystems arbeitet das Proportionaldrosselventil mit Rückschlagventilen zusammen und über die Rückschlagventile kann die Ansteuerseite des Betätigungsteils, die gerade nicht bedämpft wird, Öl aus dem Hydrospeicher aufnehmen, wodurch der Gefahr von Kavitation im Hydraulikkreis begegnet ist, wie sie ansonsten häufig bei den Lösungen im Stand der Technik auftritt. In besonders vorteilhafter Weise tritt die Kavitationsvermeidung bei Lösungen ein, bei denen das Proportionaldrosselventil mit den Rückschlagventilen eine Art hydraulische Gleichrichterschaltung bildet.

Weitere vorteilhafte Ausführungsformen sind Gegenstand der sonstigen Unteransprüche.

Im folgenden wird das erfindungsgemäße Dämpfungssystem anhand verschiedener Ausführungsbeispiele nach der Zeichnung näher erläutert. Dabei zeigen in der Art von hydraulischen Funktions- und Schaltplänen die
- Fig.1: den Grundaufbau eines zum Einsatz kommenden Proportionaldrosselventils in unbetätigter und betätigter Stellung;
- Fig.2 und 3: den Ein- und Ausfedervorgang bei einem hydraulischen Arbeitszylinder; eingesetzt für eine Kabinenfederung;
- Fig.4: eine Variante zu der Lösung nach den Fig.2 und 3 mit im Gehäuse des Proportionaldrosselventils integrierten Rückschlagventilen,
- Fig.5 und 6: den Ein- und Ausfedervorgang bei einem geänderten Dämpfungssystem in entsprechender Darstellung zu der Lösung nach den Fig. 2 und 3.

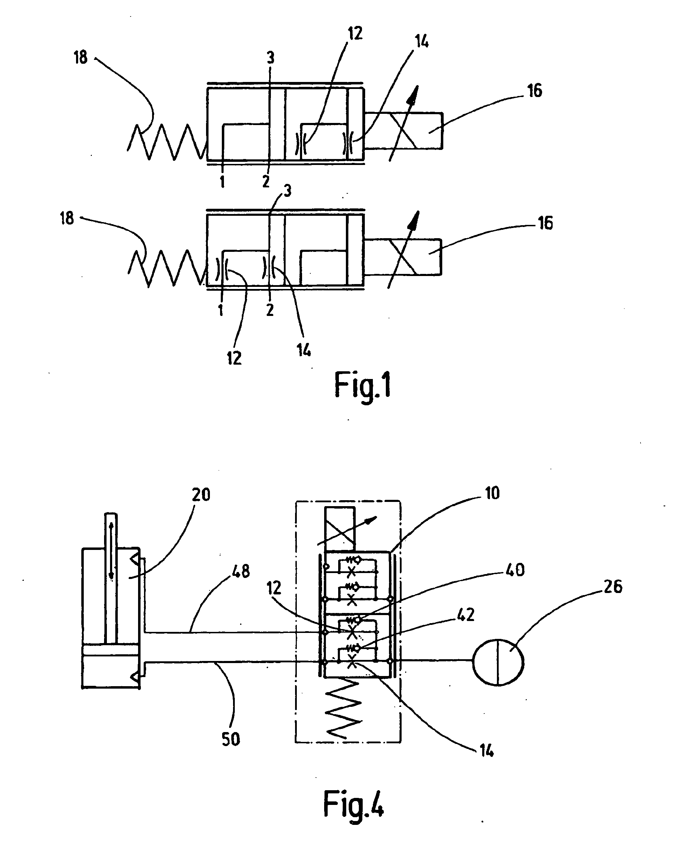

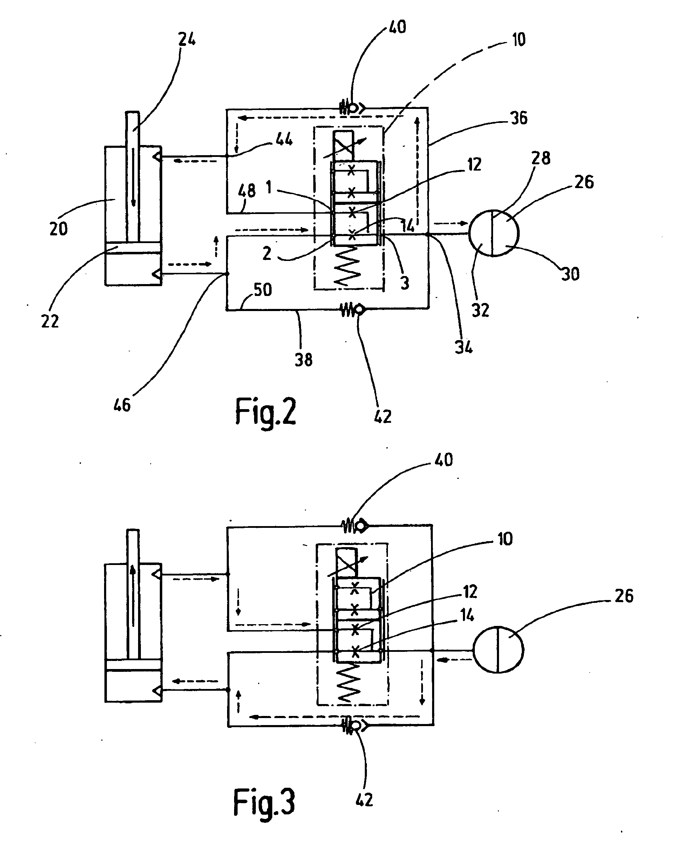

Die Fig. 1 zeigt ein Proportionaldrosselventil 10, welches die Anschlüsse 1, 2 und 3 in fluidführender Weise miteinander verbindet. Die beiden integrierten Drosseln 12,14 können je nach Anwendungsfall den gleichen freien Öffnungsquerschnitt haben, aber auch unterschiedliche Querschnitte besitzen. Das Proportionaldrosselventil 10, welches in der Grundstellung (stromlos) komplett geschlossen ist oder einen vorgebbaren drosselnden Anfangs-Öffnungsquerschnitt hat, gibt proportional zum Einstellweg einen sich zusehends vergrößernden Fluidquerschnitt frei. Es besteht aber auch die Möglichkeit, dass das Ventil 10 in der Grundstellung (stromlos) komplett geöffnet ist und dann über den Einstellweg proportional geschlossen wird. Zum Ansteuern des Proportionaldrosselventils 10 dient eine elektromagnetische Stelleinrichtung 16 und über eine Rückstellfeder 18 läßt sich das Proportionaldrosselventil 10 in seine in der Fig.1 gezeigte Ausgangsstellung zurückbringen. Die Darstellung des Proportionaldrosselventils 10 nach der Fig.1 ist in den Fig.2 bis 4 dahingehend geändert, als nur die Drosseln 12,14 dargestellt sind, um dergestalt den proportionalen Einstellcharakter des Ventils 10 herauszustellen.

In der Fig.2 ist eine Grundschaltung des erfindungsgemäßen Dämpfungssystems gezeigt. Insbesondere ist das Dämpfungssystem in Form einer hydraulischen Kabinenfederung ausgebildet, wobei dahingehende Kabinenfederungen an sich bekannt sind, so dass an dieser Stelle hierauf nur noch insoweit eingegangen wird, als sie sich erfindungsgemäß vom Stand der Technik unterscheiden. Die genannte Kabine oder ein sonstiger Fahrzeugaufbau ist an ein hydraulisch ansteuerbares Betätigungsteil 20 angekoppelt, hier in Form eines hydraulischen Arbeitszylinders mit einem Kolbenteil 22 und einem Stangenteil 24. Das dahingehende Betätigungsteil in Form eines Arbeitszylinders steht darüber hinaus regelmäßig in Wirkverbindung mit einem Einzelrad oder einem Radsatz (nicht dargestellt) des Arbeitsfahrzeuges. Das hydraulische Betätigungsteil 20 als solches von seiner grundsätzlichen Funktion her braucht aber nicht auf hydraulische Arbeitsoder Federungszylinder eingeschränkt zu sein; vielmehr kommen hier auch andere hydraulische Einrichtungen zum Einsatz mit Komponenten, die in zwei gegenläufigen Richtungen ansteuerbar sind, wie beispielsweise Hydromotoren (nicht dargestellt).

Mit dem erfindungsgemäßen Dämpfungssystem ließe sich also auch die "Federung" für einen Hydromotor bei dessen Arbeitseinsatz realisieren, was beispielsweise in Aufzugkabinen oder für Hubstabler jedweder Art eine Rolle spielen kann. Des weiteren ist für das Betätigungsteil 20 ein Hydrospeicher 26 vorgesehen, der vorzugsweise aus einem auf diesem Gebiet üblichen Membranspeicher gebildet ist. Der dahingehende Hydrospeicher 26 weist eine Trennmembran 28 auf, die eine Gasseite 30 des Speichers von seiner Fluidseite 32 trennt und der Hydrospeicher 26 läßt sich in Abhängigkeit des Fluiddruckes auf seiner Gasseite 30 entsprechend vorspannen und bildet dann insoweit ein Energiereservoir für eingespeicherte hydraulische Energie aus. Der Anschluß 3 des Proportionaldrosselventils 10 ist an die Fluidseite 32 des Hydrospeichers 26 angeschlossen und zwischen dem Hydrospeicher 26 und dem Proportionaldrosselventil 10 ist eine Abzweigstelle 34 geschaffen, in die Fluidleitungen 36 und 38 einmünden mit federbelasteten Rückschlagventilen 40 und 42, die ihre sperrende Stellung jeweils in Richtung zu der Fluidseite 32 des Hydrospeichers 26 hin einnehmen. Die Fluidleitung 36 mündet ferner auf die Stangenseite des Arbeitszylinders 20 und die Fluidleitung 38 in den zugeordneten Kolbenraum des Zylinders 20. Über weitere Abzweigstellen 44 und 46 münden zugeordnete Fluidleitungen 48,50 in die Anschlüsse 1 bzw.2 des Ventiles 10.

Die Fig.2 zeigt die fluidführende Situation beim Einfedern, d.h. in Blickrichtung auf die Fig.2 gesehen bewegen sich Kolbenteil 22 und Stangenteil 24 nach unten gemäß der Pfeildarstellung für das Betätigungsteil 20. Die weiteren strichlinierten Pfeile geben dann den groben Fluidverlauf im hydraulischen Kreis des Dämpfungssystems wieder, wobei hydraulische Energie in den Hydrospeicher 26 eingebracht wird, in dem Fluid auf die Fluidseite 32 desselben verdrängt wird. Ferner ist bei dem in der Fig.2 gezeigten Einfedervorgang das obere Rückschlagventil 40 geöffnet und das Rückschlagventil 42 geschlossen, so dass das aus dem Kolbenraum mittels des Kolbenteils 22 verdrängte Fluid über die Drossel 14 des Ventils 10 in Richtung Speicher 26 geführt ist.

Die Fig.3 zeigt wiederum in umgekehrter Richtung den Ausfedervorgang und das auf der Stangenseite verdrängte Fluid gelangt über die Drossel 12 in den Nachströmkreis für die Kolbenseite des Federungszylinders 20 bei geöffnetem Rückschlagventil 42 und geschlossenem Rückschlagventil 40 auf der Stangenseite, so dass insoweit das aus dem Zylinder 20 verdrängte Fluid gedrosselt den Nachströmweg auf die Kolbenseite des Zylinders nimmt, wobei der dahingehende Ausfahr- oder Ausfedervorgang von Kolbenteil 22 und Stangenteil 24 in Blickrichtung auf die Fig.3 gesehen nach oben hin von dem Hydrospeicher 26 dann unterstützt ist.

Die gezeigte Ausführungsform nach den Fig.2 und 3 zeigt auf, dass das Verhältnis der Öffnungsquerschnitte der Drosseln 12 und 14 des Proportionaldrosselventils 10 in Abhängigkeit des Flächehverhältnisses des Zylinders (Kolben-zu Ringfläche) für das Betätigungsteil 20 über den gesamten Ventilhub des Ventils 10 gleichbleibend realisiert ist. Das Verhältnis der Öffnungsquerschnitte für die Drosseln 12,14 ist mithin gleich dem Flächenverhältnis Kolben zu Ringfläche von Kolbenteil 22 zu Stangenteil 24. Hierdurch ergibt sich bei gleicher Ventilstellung die Ein- bzw. Ausfederbewegung, wie dargestellt, in gleichmäßiger Weise bedämpft, da sich der Volumenstrom in Abhängigkeit der Zylinderflächen gleichmäßig verändern kann. Über die genannten Rückschlagventile 40,42 kann die jeweilige Zylinderseite (Kolbenteil 22 oder Stangenteil 24), welche gerade nicht bedämpft wird, Öl aus dem Hydrospeicher 26 aufnehmen, wodurch die Gefahr von Kavitation im Kreis des Dämpfungssystems verhindert ist.

Bei der geänderten Ausführungsform nach der Fig.4 sind die Rückschlagventile 40,42 in Parallelanordnung zu der zuordenbaren Drossel 14,12 geschaltet und durch Einsatz der dahingehend integrierten Rückschlagventile 40,42 lassen sich zusätzliche Fluidleitungen einsparen und das Proportionaldrosselventil 10 kann direkt über die Fluidleitungen 48,50 auf die Stangenseite bzw. die Kolbenseite des Betätigungsteils 20 in Form des Arbeitszylinders angeschlossen werden.

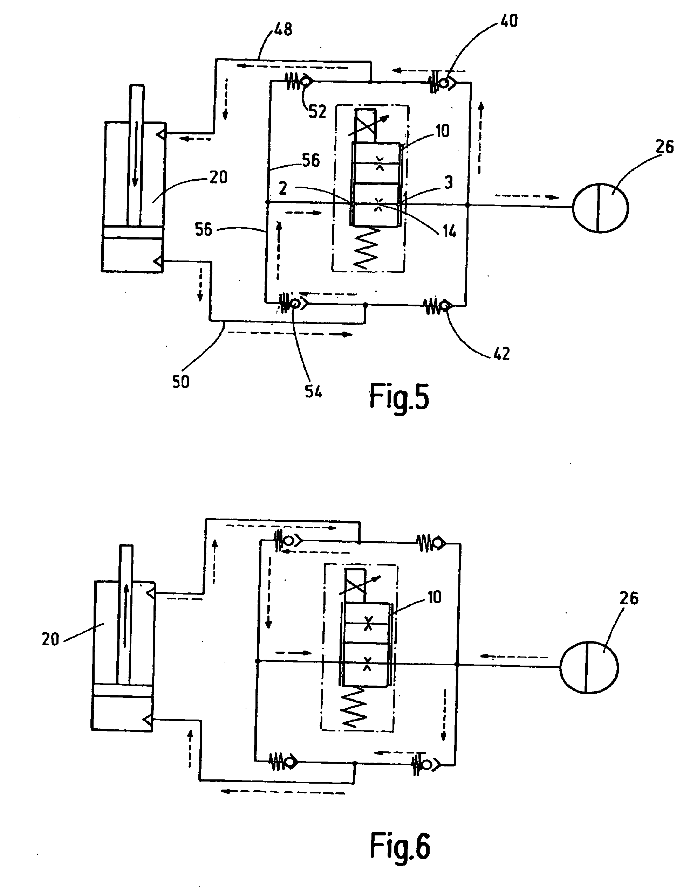

Die geänderte Ausführungsform nach den Fig.5 und 6 wird nur noch insofern erläutert, als sie sich wesentlich von den vorangegangenen Ausführungsbeispielen unterscheidet. Fig.5 zeigt dabei wiederum einen Einfederungsvorgang, vergleichbar zu der Fig.2, und die Fig.6 betrifft einen Ausfederungsvorgang, vergleichbar der Darstellung nach der Fig.3. Als Proportionaldrosselventil 10 kommt diesmal ein solches mit nur einer Drossel 14 zum Einsatz und die im Nebenzweig angeordnete parallele Drossel 12 ist bei der Ausführungsform nach den Fig. 5 und 6 nicht notwendig. Stattdessen sind dort zwei weitere Rückschlagventils 52 und 54 im Einsatz und die Rückschlagventilpaare 40,42 und 52,54 sind zusammen mit dem Proportionaldrosselventil 10 in der Art einer hydraulischen Gleichrichterschaltung miteinander verschaltet. Die an das Betätigungsteil 20 angeschlossenen Fluidleitungen 48 und 50 münden jeweils zwischen zwei benachbarte Rückschlagventile 42 und 54 bzw. 40 und 52 ein. In Öffnungsrichtung sind die Rückschlagventile 52 und 54 über entsprechende Fluidleitungen 56 auf die Anschlußseite 2 des Ventils 10 gelegt, wohingegen der Anschluß 3 wiederum fluidführend mit dem Hydrospeicher 26 verbunden ist. Der im Nebenzweig nach der Ausführungsform nach den Fig.2 bis 4 vorgesehene Anschluß 1 ist insoweit entfallen.

Für den in der Fig.5 dargestellten Einfederungsvorgang sind die in verschiedenen Fluidzweigen liegenden Rückschlagventile 40 und 54 geöffnet, wohingegen die weiteren Rückschlagventile 42 und 52 geschlossen sind. Beim Einfedern erfolgt wiederum über die Drossel 14 die benötigte Dämpfung. Beim Ausfedervorgang nach der Fig.6 sind dann die Rückschlagventile 42 und 52 geöffnet, wohingegen die Rückschlagventile 40 und 54 geschlossen sind. Die Ausfederung erfolgt wiederum unterstützt durch den Fluidaustrag auf der Fluidseite 32 des Hydrospeichers 26.

Mit dem erfindungsgemäßen Dämpfungssystem nach den Fig.5 und 6 wird das zu dämpfende Öl immer durch das Proportionaldrosselventil 10 geleitet, wobei über die jeweils zuordenbare Rückschlagventile der Arbeitszylinder 20 auf der nicht zu dämpfenden Seite Öl verlustfrei nachführen kann. Es wird mithin immer nur die Druckseite bedämpft, unabhängig davon, welche Bewegungsrichtung am Betätigungsteil 20 vorliegt. Mittels der genannten Rückschlagventile wird die Gefahr von Kavitation auf der jeweiligen Zugseite des Betätigungsteils 20 verhindert. Sofern bei dem Ausführungsbeispiel nach den Fig.2 bis 4 eine gleiche Dämpfung in beiden Richtungen mittels des Proportionaldrosselventils 10 vorzugsweise zu erfolgen hat, muß der freie Öffnungsquerschnitt der Drossel 12 kleiner sein als derjenige der Drossel 14.

Die erfindungsgemäße Dämpfungssystem-Lösung kommt für einen Arbeitszylinder (Betätigungsteil 20) mit nur einem Proportionaldrosselventil 10 aus, was eine rasche und zielgerichtete Ansteuerung erleichtern hilft. Insbesondere kann der Regelungsaufwand deutlich reduziert werden. Auch ist das erfindungsgemäße Dämpfungssystem sicher in der Funktion und benötigt wenig Einbauraum. Aufgrund der geringen Anzahl an Komponenten ist darüber hinaus eine kostengünstige Realisierung möglich.

## Patentansprüche

1. Dämpfungssystem, insbesondere in Form einer hydraulischen Kabinenfederung, mit mindestens einem hydraulisch ansteuerbaren Betätigungsteil (20) und mit mindestens einem, an das zuordenbare Betätigungsteil (20) angeschlossenen Hydrospeicher (26), wobei mittels eines Proportionaldrosselventils (10) eine proportionale Dämpfung für das jeweilige Betätigungsteil (20) erreicht ist und wobei das Proportionaldrosselventil (10) mit zwei Drosseln (12,14) mit gleichen oder verschiedenen Öffnungsquerschnitten versehen ist, **dadurch gekennzeichnet, dass** das Verhältnis der Öffnungsquerschnittsflächen für die Kolbenstangenseite und Kolbenseite eines Arbeitszylinders (20) proportional zu dem Verhältnis der Flächen von seiner Kolbenstangenseite und Kolbenseite ist und dass die genannten Öffnungsquerschnitte durch Dämpfungsbohrungen gebildet sind.

2. Dämpfungssystem nach Anspruch 1, **dadurch gekennzeichnet, dass** das Proportionaldrosselventil (10) mit Rückschlagventilen (40,42) zusammenarbeitet.

3. Dämpfungssystem nach Anspruch 1 oder 2, **dadurch gekennzeichnet, dass** das Proportionaldrosselventil mit den Rückschlagventilen (40,42,52,54) eine Art hydraulische Gleichrichterschaltung bildet.

4. Dämpfungssystem nach Anspruch 2 oder 3, **dadurch gekennzeichnet, dass** die Rückschlagventile (40,42) in dem Proportionaldrosselventil (10) integriert sind.

5. Dämpfungssystem nach Anspruch 2 oder 3, **dadurch gekennzeichnet, dass** mindestens ein Paar (40,42), vorzugsweise zwei Paare (52,54) an Rückschlagventilen in Richtung des zuordenbaren Hydrospeichers (26) ihre Schließstellung einnehmen.

6. Dämpfungssystem nach einem der Ansprüche 1 bis 5, **dadurch gekennzeichnet, dass** das Proportionaldrosselventil (10) mittels einer elektromagnetischen Stelleinrichtung (16) ansteuerbar und mittels einer Rückstellfeder (18) in seine Ausgangsstellung zurückkehrt.

7. Dämpfungssystem nach einem der Ansprüche 1 bis 6, **dadurch gekennzeichnet, dass** das ansteuerbare Betätigungsteil (20) ein Arbeitszylinder, insbesondere ein Federungszylinder ist.

## Claims

1. A damping system, in particular in the form of a hydraulic cabin spring, having at least one hydraulically triggerable actuating part (20) and having at least one hydraulic accumulator (26) which is connected to the assignable actuating part (20), proportional damping for the respective actuating part (20) being achieved by means of a proportional throttle valve (10), and the proportional throttle valve being provided with two chokes (12, 14) with the same or different opening cross sections, **characterised in that** the ratio of the opening cross-sectional areas for the piston rod side and the piston side of a working cylinder (20) is in proportion to the ratio of the areas of its piston rod side and piston side, and that said opening cross sections are formed by damping bore holes.

2. The damping system according to Claim 1, **characterised in that** the propotional throttle valve (10) co-operates with non-return valves (40, 42).

3. The damping system according to Claim 1 or 2, **characterised in that** the proportional throttle valve with the non-return valves (40, 42, 52, 54) forms a type of hydraulic recitifer circuit.

4. The damping system according to Claim 2 or 3, **characterised in that** the non-return valves (40, 42) are integrated into the proportional throttle valve (10).

5. The damping system according to Claim 2 or 3, **characterised in that** at least one pair (40, 42), preferably two pairs (52, 54), of non-return valves assume their closed position in the direction of the assignable hydraulic accumulator (26).

6. The damping system according to any of Claims 1 to 5, **characterised in that** the proportional throttle valve (10) can be triggered by means of an electromagnetic actuator (16) and returns to its initial position by means of a reset spring (18).

7. The damping system according to any of Claims 1 to 6, **characterised in that** the triggerable actuating part (20) is a working cylinder, in particular a suspension cylinder.

## Revendications

1. Système d'amortissement, notamment sous la forme d'une suspension hydraulique de cabine, comprenant au moins une partie (20) d'actionnement, qui peut être commandée hydrauliquement, et comprenant au moins un accumulateur (26) hydraulique raccordé à la partie (20) d'actionnement pouvant être associé, dans lequel, au moyen d'un robinet (10) d'étranglement proportionnel, un amortissement proportionnel de la partie (20) d'actionnement respective est atteint et dans lequel le robinet (10) d'étranglement proportionnel est pourvu de deux étranglements (12, 14) ayant des sections transversales d'ouverture pareilles ou différentes, **caractérisé en ce que** le rapport des surfaces de section transversale d'ouverture, pour le côté tige de piston et pour le côté piston d'un cylindre (20) de travail, est proportionnel au rapport des surfaces de son côté de tige de piston et de son côté piston et **en ce que** lesdites sections transversales d'ouverture sont formées par des trous d'amortissement.

2. Système d'amortissement suivant la revendication 1, **caractérisé en ce que** le robinet (10) d'étranglement proportionnel coopère avec des clapets antiretour (40, 42).

3. Système d'amortissement suivant la revendication 1 ou 2, **caractérisé en ce que** le robinet d'étranglement proportionnel forme, avec les clapets. (40, 42, 52, 54) antiretour, une sorte de circuit hydraulique redresseur.

4. Système d'amortissement suivant la revendication 2 ou 3, **caractérisé en ce que** les clapets (40, 42) antiretour sont intégrés dans le robinet (10) d'étranglement proportionnel.

5. Système d'amortissement suivant la revendication 2 ou 3, **caractérisé en ce qu'**au moins une paire (40, 42), de préférence deux paires (52, 54) de clapets antiretour, prennent, leur position de fermeture dans la direction de l'accumulateur (26) hydraulique pouvant être associé.

6. Système d'amortissement suivant l'une des revendications 1 à 5, **caractérisé en ce que** le robinet (10) d'étranglement proportionnel peut être commandé au moyen d'un dispositif (16) électromagnétique de réglage et revient dans la position de départ au moyen d'un ressort (18) de rappel.

7. Système d'amortissement suivant l'une des revendications 1 à 6, **caractérisé en ce que** la partie (20) d'actionnement qui peut être commandée est un cylindre de travail, notamment un cylindre d'amortissement.
